# EUROPEAN PATENT APPLICATION

(11) **EP 1 672 466 A1**
(43) Date of publication of application: **21.06.2006**
(21) Application number: 04029639.4
(22) Date of filing: 15.12.2004
(51) Int. Cl.: G06F 1/32

(54) **Power controller and power control method for an electronic equipment**

(71) Applicant: Sony Ericsson Mobile Communications AB, 221 88 Lund (SE)
(72) Inventor: Olsson, Jonas, 254 37 Helsingborg (SE)
(74) Representative: Körber, Martin Hans

(57) **Abstract**

The present invention relates to a power controller 2 for an electronic equipment 1, said power controller 2 being adapted to distribute power supplied by a power supply 4 of the electronic equipment 1 to other elements 5, 6, 7, 8, 9, 10 of the electronic equipment 1 and to regulate the power consumption of the electronic equipment 1. According to the present invention the power controller 2 automatically detects an uneven power consumption of the electronic equipment 1, automatically identifies at least one application program currently executed by a microprocessor 7 of the electronic equipment 1 and automatically regulates the power consumption of the electronic equipment 1 in dependency on said at least one identified application program and the detected uneven power consumption. Furthermore, a corresponding control method for an electronic equipment is disclosed.

## Description

### TECHNICAL FIELD OF THE INVENTION

The present invention relates to a power controller for an electronic equipment, said power controller being adapted to distribute power supplied by a power supply of the electronic equipment to other elements of the electronic equipment and to regulate the power consumption of the electronic equipment.

Furthermore, the present invention relates to a power control method for distributing power supplied by a power supply of electronic equipment to other elements of the electronic equipment and for regulating the power consumption of the electronic equipment.

### DESCRIPTION OF RELATED ART

Mobile electronic equipment is widely used in various technical fields. Said mobile electronic equipment usually is powered by one or plural batteries that frequently are rechargeable. Alternatively, said mobile electronic equipment might be powered by a solar panel, for example. Typical examples of mobile electronic equipment is a mobile radio terminal, a mobile telephone, a pager, a communicator, an electronic organiser, a laptop, or the like.

Power control and thus distribution of power supplied by a power supply of the electronic equipment to the other elements of the electronic equipment is an important point to economise the power consumption of the mobile electronic equipment.

According to the prior art it is known to provide separate power modes of the mobile electronic equipment, e.g. a phone mode, a personal digital assistant mode, a presentation mode or a battery save mode. These mechanisms usually limit power consumption by using screen savers, stand-by screens, automatic switch off of backlight etc.. Furthermore, it is known to change the CPU frequency of a microprocessor used in the electronic equipment to reduce the power consumption of the microprocessor.

It is a disadvantage with power controllers according to the prior art that predefined power modes have to be selected manually. Thus, the current usage of a respective mobile electronic equipment is not accounted for. Frequently a predefined power mode previously selected by a user is maintained even when the usage of the electronic equipment is changes. In consequence the selected power mode might not fit any more to the usage of the electronic equipment.

Furthermore, the power controllers according to the prior art regulate the battery consumption by switching off elements of the mobile electronic equipment in dependency on said predefined power modes, only. This results in an uneven power consumption of the mobile electronic equipment.

It is the object of the present invention to provide a power controller for an electronic equipment and a power control method for distributing power supplied by power supply of an electronic equipment to other elements of the electronic equipment and for regulating the power consumption of the electronic equipment in a way that an even power consumption of the electronic equipment is achieved.

### SUMMARY

The above object is solved in a power controller for electronic equipment comprising the features of the preamble of independent claim 1 by the features of the characterising portion of independent claim 1.

Furthermore, the above object is solved by a power control method comprising the combination of features of independent claim 13.

Preferred embodiments of the present invention are defined in the respective dependent claims.

The present invention discloses a power controller for an electronic equipment, said power controller being adapted to distribute power supplied by a power supply of the electronic equipment to other elements of the electronic equipment and to regulate the power consumption of the electronic equipment, wherein the power controller automatically detects an uneven power consumption of the electronic equipment, automatically identifies at least one application program currently executed by a microprocessor of the electronic equipment and automatically regulates the power consumption of the electronic equipment in dependency on said at least one identified application program and the detected uneven power consumption.

By automatically regulating the power consumption of the electronic equipment in dependency on said detected uneven power consumption, an aberration of an actual power consumption of the electronic equipment from an optimum power consumption of the electronic equipment is accounted for. Furthermore, by automatically regulating the power consumption of the electronic equipment in dependency on said at least one identified application program specific requirements of the application program are considered. Thus, uneven power consumption is avoided. This extends lifetime of a power supply significantly. By identifying a currently executed application program and regulating the power consumption of the electronic equipment correspondingly, the inventive power controller provides an interface to control the performance and power consumption of applications executed by the electronic equipment.

According to a preferred embodiment said power controller is further adapted to automatically read out a user profile from a memory of said electronic equipment and to automatically regulate the power consumption of the electronic equipment in dependency on said read out user profile.

In consequence, the inventive power controller allows adaptation of power control to individual needs of users of the electronic equipment.

In this respect it is preferred that at least one predefined user profile is stored in said memory of said electronic equipment.

By storing at least one predefined user profile in a memory of the electronic equipment a manual input of a user profile is not necessary. By providing the possibility to select a predefined common user profile typical for a certain group of users the inventive power controller is very user friendly.

Preferably, at least one individual user profile is input via a user interface of said electronic equipment and stored in said memory of said electronic equipment.

Input of an individual user profile allows an individual adaptation of the inventive power controller to the individual needs of a user.

According to a preferred embodiment the power controller is further adapted to automatically identify a type of the at least one identified application program and to regulate the power consumption in dependency on said identified type of said at least one identified application program.

In consequence, different types of application programs automatically are distinguished, wherein the inventive power controller regulates power consumption of the electronic equipment by considering the requirements and / or priority of a respective type of application program.

Favourably, the power controller is further adapted to automatically manipulate execution of said at least one application program by said microprocessor to regulate the power consumption of the electronic equipment in dependency on said at least one identified application program and / or on said read out user profile and / or said identified type of said at least one identified application program.

In consequence, the inventive power controller provides a policy-based mechanism to prioritise power consumption of the electronic equipment in dependency on at least one identified application program and / or a read out user profile and/or an identified type of said at least one identified application program. By automatically manipulating the execution of at least one application program the inventive power controller generates a dependency between the performance of said application program and the power consumption caused by the application program.

In this respect it is preferred that said power controller automatically activates / deactivates elements of the electronic equipment addressed by said application program to increase / decrease the amount of power necessary to run the application program.

By activating/deactivating elements of the electronic equipment addressed by the application program the inventive power controller controls the amount of power necessary to run the application program and thus the amount of power consumed by the electronic equipment in a very easy and reliable way.

It is beneficial if said power controller is adapted to perform the detection of an uneven power consumption by measurement of a current power consumption of said electronic equipment and by comparison of said measured current power consumption with an optimum power consumption curve.

By comparison of a measured current power consumption of said electronic equipment with an optimum power consumption curve the inventive power controller automatically detects an uneven power consumption of the electronic equipment with ease.

In this case it is profitable if the power controller is further adapted to calculate a respective optimum power consumption curve for a respective power supply.

In consequence, variable characteristics of a respective power supply, e.g. due to ageing are accounted for.

Furthermore, it is preferred that said power controller further comprises a storage means, wherein at least one predefined optimum power consumption curve for a respective power supply is stored in said storage means.

Standardised power supplies frequently are used with electronic equipment. In consequence, it is favourable if at least one predefined optimum power consumption curve for a respective power supply is stored in storage means of the power controller to avoid the necessity of a complex calculation of an individual optimum power consumption curve for said respective power supply.

It is beneficial if said optimum power consumption curve is an optimum battery power consumption curve of at least one battery of said electronic equipment, wherein the main functions of said electronic equipment are powered by said at least one battery.

Batteries frequently are used to guarantee mobility of electronic equipment.

Favourably, the power controller is further adapted to detect a capacity of said at least one battery and to calculate the respective optimum battery power consumption curve for said at least one battery in dependency on said detected capacity.

By detecting a capacity of said battery the respective optimum battery power consumption curve can be calculated with ease by the inventive power controller.

According to the present invention a power control method for distributing power supplied by a power supply of an electronic equipment to other elements of the electronic equipment and for regulating the power consumption of the electronic equipment comprises the following steps:
- automatic detection of an uneven power consumption of the electronic equipment;
- automatic identification of at least one application program currently executed by a microprocessor of the electronic equipment; and
- automatic regulation of the power consumption of the electronic equipment in dependency on said at least one identified application program and the detected uneven power consumption.
   Favourably, said method further comprises the step of
- an automatic read out of a user profile from a memory of said electronic equipment,
wherein said automatic regulation of the power consumption of the electronic equipment further is performed in dependency on said read out user profile.

It is preferred that said method further comprises the step of
- an automatic identification of a type of the at least one identified application program, wherein said automatic regulation of the power consumption of the electronic equipment further is performed in dependency on said identified type of said at least one identified application program.
   Profitably, said step of automatic regulation of the power consumption of the electronic equipment is performed by an automatic manipulation of execution of said at least one application program by said microprocessor in dependency on said at least one identified application program and / or on said read out user profile and / or said identified type of said at least one identified application program.
   Furthermore, it is beneficial if said step of automatic regulation of the power consumption of the electronic equipment is performed by an activation / deactivation of elements of the electronic equipment addressed by said application program to increase / decrease the amount of power necessary to run said application program.
   Moreover, it is preferred that the step of automatic detection of an uneven power consumption of the electronic equipment is performed by the sub-steps of
- measuring a current power consumption of said electronic equipment and
- comparing said measured current power consumption with an optimum power consumption curve.
   Preferably, said method further comprises the step of
- calculating a respective optimum power consumption curve for a respective power supply.
   In this respect it is profitable if said step of calculating a respective optimum power consumption curve for a respective power supply comprises the steps of
- detecting a capacity of at least one battery of said electronic equipment, wherein the main functions of said electronic equipment are powered by said at least one battery; and
- calculating a respective battery optimum power consumption curve for said at least one battery in dependency on said detected capacity.

The above object is further solved by a computer program product directly loadable into the internal memory of a microprocessor of an electronic equipment, comprising software code portions for performing the steps of one of the claims 13 to 20 when said product is run by said microprocessor.

In consequence, the inventive method can be implemented into various electronic equipment comprising a microprocessor with ease.

It is preferred that the computer program product is embodied on a computer readable medium.

In the present patent application the term electronic equipment includes portable radio communication equipment. The term portable radio communication equipment, which herein after is referred to as a mobile radio terminal includes all equipment such as mobile telephones, pagers, communicators, i.e. electronic organisers, smartphones, or the like.

It should be emphasised that the term "comprises/comprising" when used in the present application is taken to specify the presence of stated features, integers, steps, or components, but does not preclude the presence or addition of one or more other features, integers, steps, components or groups thereof.

### BRIEF DESCRIPTION OF THE DRAWINGS

In the following, a preferred embodiment of the present invention is explained by reference to annexed drawings. In said drawings like reference signs refer to like elements.
- Fig. 1: is a block diagram of an electronic equipment comprising a power controller according to a preferred embodiment of the present invention;
- Fig. 2: is a diagram of an exemplary optimum power consumption curve and an exemplary uneven power consumption curve;
- Fig. 3A, 3B: show examples of user specific priorities;
- Fig. 4A, 4B: show examples of application program specific priorities;
- Fig. 5: shows an example of an application program type specific priority;
- Fig. 6: is a block diagram of an electronic equipment comprising a power controller according to an alternative embodiment of the present invention; and
- Fig. 7: is a flow diagram of a preferred embodiment of the inventive power control method.

### DETAILED DESCRIPTION OF EMBODIMENT

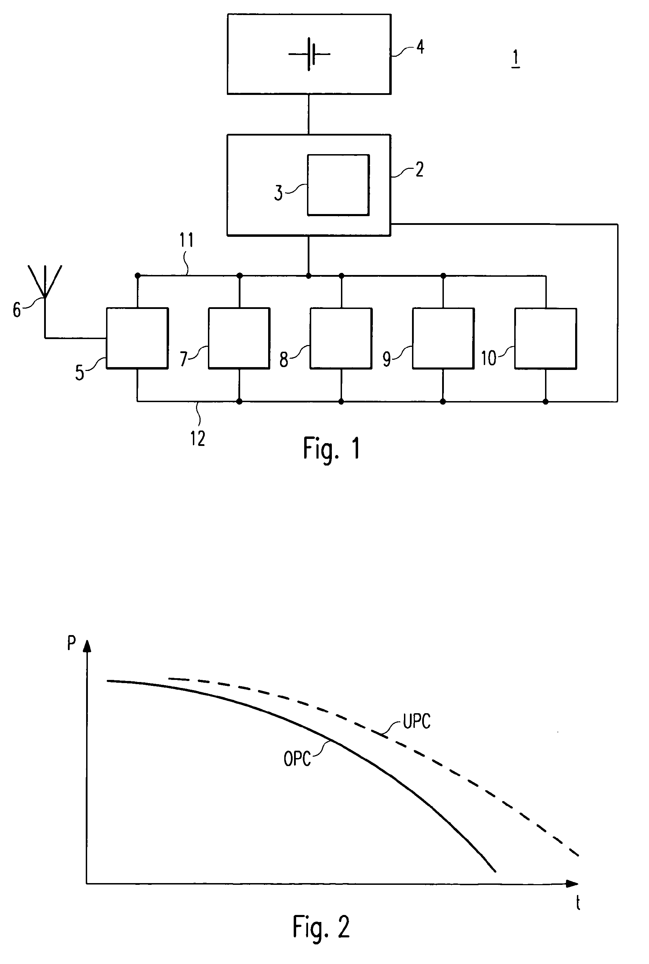

Fig. 1 shows a block diagram of an electronic equipment comprising a power controller according to a preferred embodiment of the present invention.

In the present embodiment, said electronic equipment is a mobile telephone 1 and thus a portable radio communication equipment.

Alternatively, said electronic equipment might be a pager, communicator, electronic organiser, smartphone, or the like. Further alternatively, said electronic equipment might be a hand-held mediaplayer, a portable play-station (preferably a hand-held play-station), a pocket personal computer, a hand-held digital still camera or a hand-held digital video camera.

In this respect it is preferred that the electronic equipment is a battery powered mobile electronic equipment. Further alternatively, said electronic equipment might be powered by a solar panel, a fuel cell or a conventional power supply.

Said mobile telephone 1 comprises a power controller 2 that is connected to a battery 4, an RF unit 5 that is connected to an antenna 6, a microprocessor 7, a memory 8, a display 9 and a user interface 10.

It is obvious that the mobile telephone 1 might comprise a plurality of further elements like loudspeakers etc. not shown in Fig. 1.

The RF unit 5, the microcomputer 7, the memory 8, the display 9, the user interface 10 and the power controller 2 are interconnected via a data bus 11.

Furthermore, the power controller 2 is connected to the RF unit 5, the microprocessor 7, the memory 8, the display 9 and the user interface 10 via a power transmission line 12. Via said power transmission line 12 the power controller 2 is adapted to distribute electric power from the battery 4 to the RF unit 5, the microprocessor 7, the memory 8, the display 9 and the user interface 10 of the mobile telephone 1 to regulate the power consumption of said mobile telephone 1. Thus, the battery 4 powers the main functions of said mobile telephone 1 via said power controller 2.

In the present embodiment a plurality of application programs are stored in the memory 8 and can be loaded to the microprocessor 7 via said data bus 11.

In the embodiment shown in Fig. 1 the power controller 2 is adapted to detect / measure a capacity of said battery 4 and to calculate a respective individual optimum battery power consumption curve OPC for said battery 4 in dependency on said detected capacity. Thus, ageing effects or a number of loading cycles of the battery 4 are accounted for. Said calculated optimum battery power consumption curve OPC of said battery 4 is stored in storage means 3 of the inventive power controller 2.

An example of such an optimum battery consumption curve OPC is shown in Fig. 2.

According to a preferred embodiment the inventive power controller 2 is further adapted to output a recommendation to replace the battery 4 by a new battery if the calculated optimum batter power consumption curve OPC of the battery 4 shows certain characteristics indicating a significant ageing effect of the battery 4. Said recommendation preferably is output to a user of the mobile telephone 1 via the display 9. Thus, both the sales of new batteries is supported by the inventive power controller 2 and it is guaranteed that the user is supported with an optimum battery throughout lifetime of the mobile telephone 1.

Alternatively or additionally at least one optimum power consumption curve OPC for a typical power supply of the mobile telephone 1 can be pre-recorded in said storage means 3 of the inventive power controller 2. In this case a complex calculation of an individual optimum power consumption curve UPC can be avoided.

Further alternatively or additionally establishment of an optimum battery consumption curve OPC can be performed by said power controller 2 in an adaptive manner starting from a pre-recorded (e.g. a standardised or former) optimum power consumption curve that is adapted in line with actual measurement results gained by said power controller 2. This provides a learning system.

According to the present invention the power controller 2 automatically detects an uneven power consumption UPC of the mobile telephone 1 by measuring the actual power consumption of the mobile telephone 1. Furthermore, the power controller 2 automatically identifies at least one application program currently executed by the microprocessor 7 of the mobile telephone 1. In dependency on said at least one identified application program and the detected uneven power consumption UPC the inventive power controller 2 automatically regulates the power consumption of the mobile telephone 1.

Alternatively or additionally an uneven power consumption UPC can be detected by the inventive power controller 2 by using information stored in a logging file of the power controller 2. Said logging file preferably is stored in said storage means 3 of the inventive power controller 2 and comprises both information on power consumption and information on performance of the power controller 2. Thus, the logging file comprises information on the influence the power controller 2 has had in the past on power consumption of the mobile telephone 1. Based on this logging file the power controller 2 is adapted to improve in day to day life.

Regulation of power consumption of the mobile telephone 1 in dependency on the at least one identified application program and the detected uneven power consumption UPC is performed by the power controller 2 by using predefined policies.

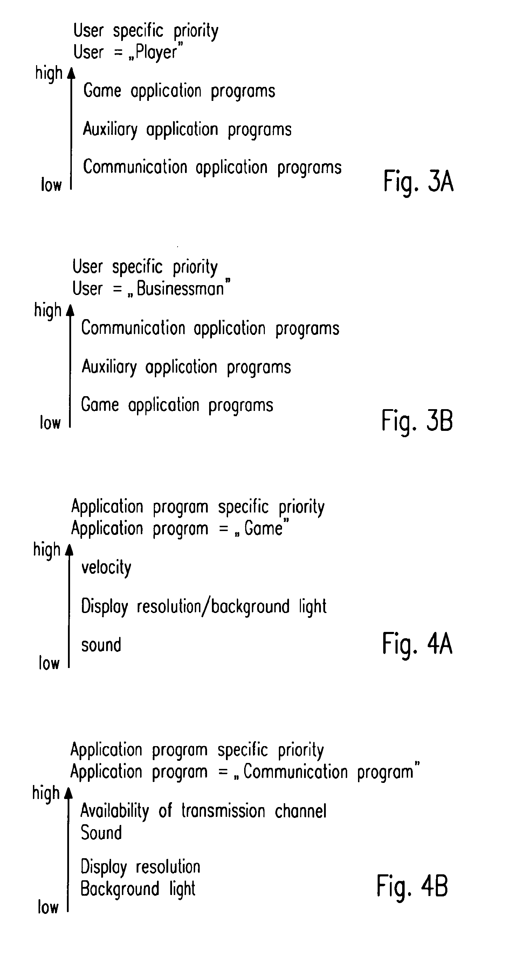

Examples of different policies for different identified applications are shown in Figs. 4A and 4B.

Figs. 4A and 4B show different examples of application program specific priorities.

If the power controller 2 identifies an application program as being a "game" as it is shown in Fig. 4A the priority of the velocity of the performance of the application program is high whereas the priority of sound performance of the application program is low.

Thus, in case of uneven power consumption the calculation of sounds caused by the application program would be reduced. Thus, calculation complexity and energy consumption caused by the application program is reduced. Alternatively a speaker (not shown in Fig. 1) and/or other elements of the mobile terminal that are not addressed by the identified application program (e.g. the RF unit 5) may be switched off completely to reduce power consumption of the mobile terminal 1.

In contrast, if an identified application program is a communication program, for example, the priority of both availability of a transmission channel and sound is high whereas the priority of display resolution and background light is low. This is shown in Fig. 4B.

In consequence, in case of uneven power consumption the display resolution and / or the frame rate might be reduced to decrease calculation complexity and energy consumption caused by said application program. Alternatively or additionally a background light or the display 9 might be switched off completely to reduce the power consumption of the mobile terminal 1.

It is obvious from the above preferred embodiment that the inventive power controller 2 is adapted to work very well with mobile telephones 1 comprising companion chips or hardware extensions (not explicitly shown in the figures). Unused companion chips and / or hardware extensions or companion chips and / or hardware extensions having a low priority with respect to a respective application program automatically can be switched off by the inventive power controller 2 to overcome an uneven power consumption of the mobile telephone 1. Influence of the inventive power controller 2 on companion chips can be guaranteed by the provision of a suitable interface between the microprocessor 7 (main processing unit of the electronic equipment) and the respective companion chip(s). In this case, regulation of power consumption can be performed by the inventive power controller 2 on a very basic level.

The necessary decrease of energy consumption depends on the aberration of the measured uneven power consumption curve UPC from the optimum power consumption curve OPC.

In Fig. 1 the power controller 2 detects the uneven power consumption UPC by measurement of a current power consumption of the mobile telephone 1 and generation of a corresponding actual power consumption curve UPC. Said actual power consumption curve UPC is compared with a calculated optimum power consumption curve OPC stored in the storage means 3 of the power controller 2.

Furthermore, it is preferred that predefined user profiles are stored in the memory 8 of the mobile telephone 1.

Said user profiles inter alia comprise a weighting of the importance of application programs according to the needs of a respective user. It is profitable that this weighting is considered by the inventive power controller 2 when regulation the power consumption of the mobile terminal 1.

Two examples of predefined user profiles stored in said memory 8 of said mobile telephone 1 are shown in Figs. 3A and 3B.

According to a first user profile shown in Fig. 3A the priority of game application programs run on the microprocessor 7 is highest wherein the priority of communication application programs run on the microprocessor 7 is lowest. Therefore, this user profile is typical for a user that prefers to use the electronic equipment for playing.

Thus, in case of uneven power consumption, the inventive power controller 2 automatically reduces the performance of auxiliary application programs and communication application programs executed on the microprocessor 7 to reduce power consumption caused by said application programs.

In contrast, according to a second user profile belonging to a businessman, the priority of communication application programs run on the microprocessor 7 is highest, whereas the priority of game application programs run on the microprocessor is lowest.

Thus, in case the power consumption is too high, the inventive power controller 2 reduces the performance of auxiliary application programs and game application programs executed by the microprocessor 7 to reduce power consumption of the mobile telephone 1.

Additional predefined user profiles might be provided for handicapped users, for example. A user profile for blind users would have a high priority for the processing of sound and no priority for the processing of graphic, for example. A user profile for deaf users would have a high priority for the processing of graphic and no priority for the processing of sound, for example.

Furthermore, in the preferred embodiment a manual input of one or plural further individual user profiles via the user interface 10 is possible. Said manually input individual user profiles are stored in the memory 8 of the mobile telephone 1. Alternatively, said manually input individual user profiles might be stored in a storage means 3 of the inventive power controller 2.

In the preferred embodiment the power controller 2 further automatically identifies a type of the least one identified application program and uses said identified type of said at least one identified application program together with said detected uneven power consumption and said identified application program to automatically regulate power consumption of the mobile telephone 1.

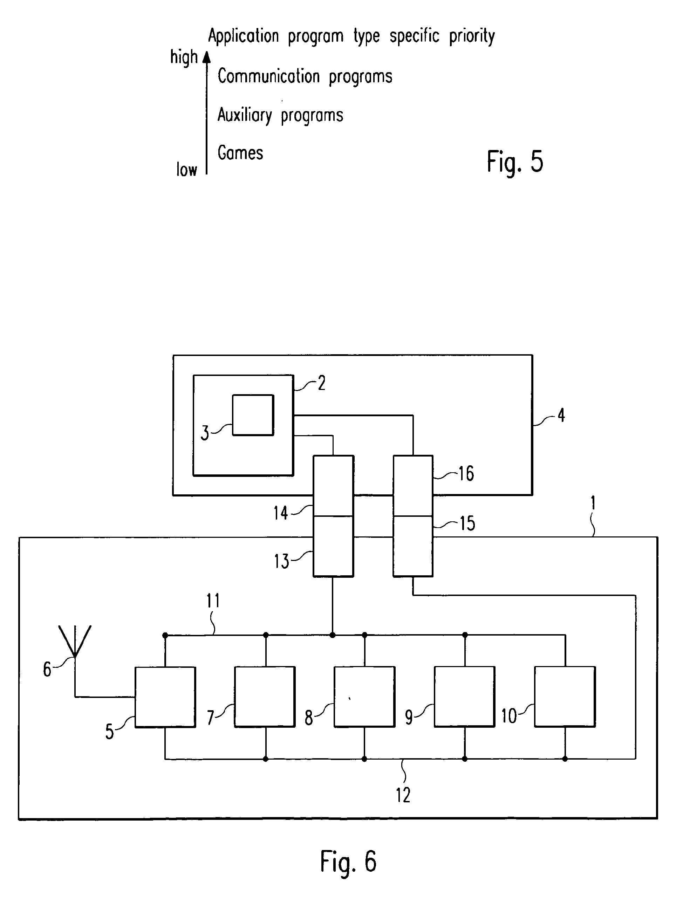

Fig. 5 shows an example of a priority scheme for different types of application programs. In this example, communication programs have a higher priority than auxiliary programs. Auxiliary programs have a higher priority than games. Although not shown in Fig. 5 system programs usually would have a higher priority than application programs.

In consequence, if uneven power consumption occurs execution of games and execution of auxiliary programs is reduced or terminated before the execution of communication programs is influenced by the detected uneven power consumption.

Thus, in the preferred embodiment execution of said at least one application program by the microprocessor 7 is automatically manipulated by the power controller 2 to regulate the power consumption of said mobile telephone 1 in dependency on said at least one identified application program and/or on said read out user profile and/or said identified type of said at least one identified application program and the detected uneven power consumption UPC of the mobile telephone 1.

From the above example it is clear that the inventive power controller 2 works very well with electronic equipment 1 having multitasking capabilities (e.g. a multitasking capable mobile phone). By automatically switching off application programs having a low priority an uneven power consumption detected by the power controller 2 can be kept as close as possible to an optimum power consumption curve OPC.

Manipulation of execution of said at least one application program by the microprocessor 7 favourably is performed by said inventive power controller 2 either by directly influencing the performance / settings of the respective application program and / or by automatically activating / deactivating elements of the mobile telephone 1 having a low priority with respect to the above detected parameters. By automatically manipulating execution of application programs and / or activating /deactivating elements of the mobile telephone 1 the amount of power necessary to run the application program on the microprocessor 7 is increased / decreased and thus the amount of power consumed by the mobile telephone 1 is increased /decreased.

According to a further preferred embodiment the inventive power controller 2 is further adapted to automatically calculate a remaining battery time based on both the detected power consumption and the optimum power consumption curve OPC calculated for the respective battery 4. Said calculated remaining battery time favourably is output to a user of the mobile telephone 1 via said display 9.

In this respect the inventive power controller 2 preferably performs plural separate calculations. A first calculation preferably is based on a mixed usage of plural application programs and/or elements of the mobile telephone 1 (e.g. video-telephoning + gaming + regular telephoning etc.). A second calculation preferably is based on a separate usage of different application programs and/or components of the mobile telephone 1 (e.g. video-telephoning only or gaming only or regular telephoning only etc.). It is preferred that the result of both calculations is output as a remaining battery time, each.

### In the following, two examplary user scenarios are explained in detail:

In a first scenario related to video-telephoning the inventive power controller 2 continuously measures power consumption of the mobile telephone 1 and outputs a corresponding indication to a user of the mobile telephone 1 via said display 9. Said indication preferably comprises a prognosis on how long power supply will suffice if the video-telephoning application is maintained and a prognosis on how long power supply would suffice if the application immediately would be switched to regular telephoning. If the inventive power controller 2 detects an uneven power consumption UPC or a critical level of a battery 4 used as a power supply of the mobile telephone 1 a camera used for video-telephoning automatically is switched off whereas telephoning is maintained. It is preferred that a prognosis on how long power supply will suffice, automatically is output when an application program is initiated (e.g. during dialing).

In a second scenario related to regular telephoning the inventive power controller 2 continuously measures power consumption of the mobile telephone 1 and outputs an corresponding indication to a user of the mobile telephone 1 via said display 9. Said indication preferably comprises a prognosis on how long power supply will suffice if the telephoning application is maintained. Based on the identified type of application and the identified user profile the inventive power controller 2 automatically recognises that the telephone application has a high priority. If no other / further application programs or elements of the mobile telephone 1 can be terminated to reduce power consumption of the electronic equipment 1 the power controller 2 automatically outputs a recommendation to the user of the mobile telephone 1 to recharge the battery or to change power supply of the mobile telephone 1 if an uneven power consumption is detected.

In consequence, the inventive power controller 2 provides an interface towards a battery consumption mechanism through a policy driven power request based on type of applications, the power usage profile of a user and the applications currently executed by a microprocessor 7 of said mobile telephone 1. By extending the regulation of the power consumption of the mobile telephone 1 to an application layer, it is possible to interconnect the performance of the identified currently executed application program and the battery consumption resulting from execution of the application program. Thus, it is possible to vary the performance of the application program in dependency on a currently measured battery capacity and a detected consumer profile to achieve a more regular power consumption and thus to increase the lifetime of the battery 4.

In the above preferred embodiment shown in Fig.1 the inventive power controller 2 is integrated into the mobile telephone 1.

According to an alternative embodiment shown in Fig. 6 the inventive power controller 2 is integrated into a removable battery pack 4 of the mobile telephone 1.

In this case both the battery 4 and the mobile telephone 1 further comprise a data interface 13, 14 and a power interface 15, 16. By using said data interface 13, 14 the inventive power controller 2 is adapted to communicate with elements of the mobile telephone 1. By using said power interfaces 15, 16 the inventive power controller 2 is adapted to provide power from said battery 4 to elements of the mobile telephone 1.

Although separate data interfaces 13, 14 and power interfaces 15, 16 are used in the present embodiment, one common data and power interface might be used, alternatively.

It is preferred that communication via said data interface 13, 14is performed according to the Hayes-protocol by using AT commands since this protocol is widely used in mobile telephones. Alternatively any other protocol and even any other existing interfaces providing a low level or high level communication between the inventive power controller 2 and the elements (especially microprocessor 7) of the electronic equipment 1 might be used. In this respect it is preferred that even a communication between the inventive power controller 2 and a user of the mobile telephone 1 can be performed via said data interface 13, 14.

Thus, according to the embodiment shown in Fig. 6 the battery 4 is a smart battery.

Although in the above embodiments the inventive power controller has been described with respect to a mobile telephone, only, any electronic equipment using more the one power consuming application at the same time (e.g. pager, communicator, electronic organiser, smartphone, hand-held mediaplayer, portable play-station (preferably a hand-held play-station), pocket personal computer, hand-held digital still camera or hand-held digital video camera) can benefit from the inventive power controller.

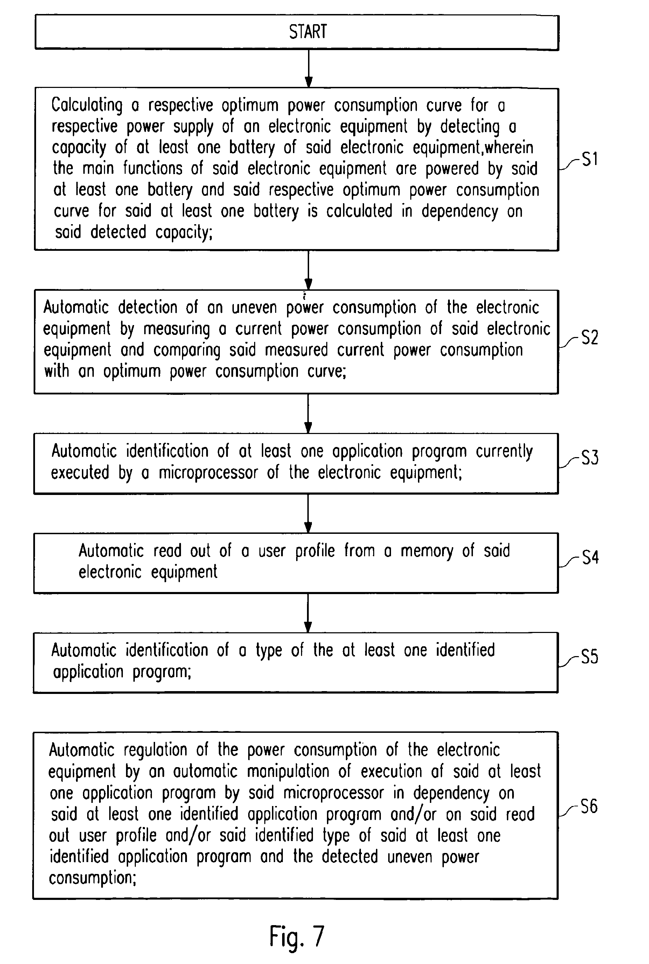

In the following a preferred embodiment of the inventive power control method is explained by reference to Fig. 7.

In a first step S1 a respective optimum power consumption curve for a respective power supply of an electronic equipment is calculated. Calculation of said optimum power consumption curve preferably is performed by detecting a capacity of at least one battery of said electronic equipment, wherein the main functions of said electronic equipment are powered by said at least one battery and said respective optimum power consumption curve for said at least one battery is calculated in dependency on said detected capacity.

In a following step S2 an uneven power consumption of the electronic equipment automatically is detected: In the present embodiment, detection of an uneven power consumption is performed by measuring a current power consumption of said electronic equipment and comparing said measured current power consumption with the optimum power consumption curve.

Afterwards, in step S3 at least one application program currently executed by a microprocessor of the electronic equipment automatically is identified.

In the following step S4 a user profile automatically is read out from a memory of said electronic equipment.

Afterwards, in step S5 a type of the least one identified application program automatically is identified.

It has to be emphasised that the order of the steps S3 to S5 is not restricted to the above scheme. Alternatively, all steps S3, S4 and S5 might be performed simultaneously, for example. Furthermore, the steps S4 and S5 are only facultative.

In the following step S6 the power consumption of said electronic equipment automatically is regulated by an automatic manipulation of execution of said at least one application program by said microprocessor in dependency on said at least one identified application program and/or on said read out user profile and/or said identified type of said at least one identified application program and the detected uneven power consumption.

In this respect, said automatic regulation of the power consumption of the electronic equipment preferably is performed by a manipulation of setting and / or preferences of said identified application program and / or an activation / deactivation of elements of the electronic equipment addressed by said application program to increase / decrease the amount of power necessary to run said application program on said electronic equipment.

After step S6 the method is looped to the step S2 to automatically detect an uneven power consumption.

It is preferred that the above described method is implemented in a computer program product directly loadable into an internal memory of a microprocessor of electronic equipment. In this respect, said computer program product preferably comprises software code portions for performing the steps of one of the claims 13 to 20 when the product is run by said microprocessor.

It is preferred that this computer program product is embodied on a computer readable medium to allow spread out of the computer program product to plural electronic equipment.

In summary, the inventive power controller guarantees an even consumption of electric power by an electronic equipment by economising regulation of the power consumption of the electronic equipment according to different policies and especially different applications run by a microprocessor of the electronic equipment.

## Claims

1. Power controller (2) for an electronic equipment (1),
said power controller (2) being adapted to distribute power supplied by a power supply (4) of the electronic equipment (1) to other elements (5, 6, 7, 8, 9, 10) of the electronic equipment (1) and to regulate the power consumption of the electronic equipment (1);
**characterised in that**
the power controller (2) automatically detects an uneven power consumption (UPC) of the electronic equipment (1),
automatically identifies at least one application program currently executed by a microprocessor (7) of the electronic equipment (1) and
automatically regulates the power consumption of the electronic equipment (1) in dependency on said at least one identified application program and the detected uneven power consumption (UPC).

2. Power controller (2) according to claim 1,
**characterised in that** said power controller (2) is further adapted
to automatically read out a user profile from a memory (8) of said electronic equipment (1) and
to automatically regulate the power consumption of the electronic equipment (1) in dependency on said read out user profile.

3. Power controller (2) according to claim 2,
**characterised in that**
at least one predefined user profile is stored in said memory (8) of said electronic equipment (1).

4. Power controller (2) according to claim 2,
**characterised in that**
at least one individual user profile is input via a user interface (10) of said electronic equipment (1) and stored in said memory (8) of said electronic equipment (1).

5. Power controller (2) according to one of the preceding claims,
**characterised in that** the power controller (2) is further adapted
to automatically identify a type of the at least one identified application program and to regulate the power consumption in dependency on said identified type of said at least one identified application program.

6. Power controller (2) according to one of the preceding claims,
**characterised in that** the power controller (2) is further adapted
to automatically manipulate execution of said at least one application program by said microprocessor (7) to regulate the power consumption of the electronic equipment (1) in dependency on said at least one identified application program and /or on said read out user profile and / or said identified type of said at least one identified application program.

7. Power controller (2) according to claim 6,
**characterised in that**
said power controller (2) automatically activates / deactivates elements (5, 6, 7, 8, 9, 10) of the electronic equipment (1) addressed by said application program to increase / decrease the amount of power necessary to run the application program.

8. Power controller (2) according to one of the preceding claims,
**characterised in that**
said power controller (2) is adapted to perform the detection of an uneven power consumption (UPC) by measurement of a current power consumption of said electronic equipment (1) and
by comparison of said measured current power consumption with an optimum power consumption curve (OPC).

9. Power controller (2) according to claim 8,
**characterised in that** the power controller (2) is further adapted
to calculate a respective optimum power consumption curve (OPC) for a respective power supply (4).

10. Power controller (2) according to claim 8,
**characterised in that**
said power controller (2) further comprises a storage means (3), wherein at least one predefined optimum power consumption curve (OPC) for a respective power supply (4) is stored in said storage means (3).

11. Power controller (2) according to one of the claims 8, 9 or 10,
**characterised in that**
said optimum power consumption curve (OPC) is an optimum battery power consumption curve of at least one battery (4) of said electronic equipment (1),
wherein the main functions of said electronic equipment (1) are powered by said at least one battery (4).

12. Power controller (2) according to claim 11,
**characterised in that** the power controller (2) is further adapted
to detect a capacity of said at least one battery (4) and
to calculate the respective optimum battery power consumption curve for said at least one battery (4) in dependency on said detected capacity.

13. Power control method for distributing power supplied by a power supply (4) of an electronic equipment (1) to other elements of the electronic equipment (1) and for regulating the power consumption of the electronic equipment (1),
the method comprising the following steps:
- (S2) automatic detection of an uneven power consumption (UPC) of the electronic equipment (1);
- (S3) automatic identification of at least one application program currently executed by a microprocessor (7) of the electronic equipment (1); and
- (S6) automatic regulation of the power consumption of the electronic equipment (1) in dependency on said at least one identified application program and the detected uneven power consumption (UPC).

14. Power control method according to claim 13,
**characterised in that** said method further comprises the step of
- (S4) an automatic read out of a user profile from a memory (8) of said electronic equipment (1),
wherein said automatic regulation of the power consumption of the electronic equipment (1) further is performed in dependency on said read out user profile.

15. Power control method according to claim 13 or 14,
**characterised in that** said method further comprises the step of
- (S5) an automatic identification of a type of the at least one identified application program,
wherein said automatic regulation of the power consumption of the electronic equipment (1) further is performed in dependency on said identified type of said at least one identified application program.

16. Power control method according to one of the claims 13, 14 or 15,
**characterised in that**
said step (S6) of automatic regulation of the power consumption of the electronic equipment (1) is performed by an automatic manipulation of execution of said at least one application program by said microprocessor (7) in dependency on said at least one identified application program and / or on said read out user profile and /or said identified type of said at least one identified application program.

17. Power control method according to claim 16,
**characterised in that**
said step (S6) of automatic regulation of the power consumption of the electronic equipment (1) is performed by an activation / deactivation of elements of the electronic equipment (1) addressed by said application program to increase /decrease the amount of power necessary to run said application program.

18. Power control method according to one of the claims 13 to 17,
**characterised in that**
the step (S2) of automatic detection of an uneven power consumption (UPC) of the electronic equipment (1) is performed by the sub-steps of
- measuring a current power consumption of said electronic equipment (1) and
- comparing said measured current power consumption with an optimum power consumption curve (OPC).

19. Power control method according to one of the claims 13 to 18,
**characterised in that** said method further comprises the step of
- (S1) calculating a respective optimum power consumption curve (OPC) for a respective power supply (4).

20. Power control method according to claim 19,
**characterised in that**
said step (S1) of calculating a respective optimum power consumption curve (OPC) for a respective power supply (4) comprises the steps of
- detecting a capacity of at least one battery of said electronic equipment (1), wherein the main functions of said electronic equipment (1) are powered by said at least one battery; and
- calculating a respective optimum battery power consumption curve for said at least one battery in dependency on said detected capacity.

21. A computer program product directly loadable into the internal memory of a microprocessor of an electronic equipment, comprising software code portions for performing the steps of one of the claims 13 to 20 when said product is run by said microprocessor.

22. A computer program product according to claim 21,
**characterised in that**
the computer program product is embodied on a computer readable medium.
